(19) Europäisches Patentamt
European Patent Office
Office européen des brevets

(11) Veröffentlichungsnummer : **0 026 308**
**B1**

(12)

# EUROPÄISCHE PATENTSCHRIFT

(45) Veröffentlichungstag der Patentschrift : **22.06.83**

(51) Int. Cl.³ : **C 09 D 17/00**, C 09 D 7/02

(21) Anmeldenummer : **80104861.2**

(22) Anmeldetag : **16.08.80**

(54) **Verwendung von Reaktionsprodukten ungesättigter Dicarbonsäuren und Estern als Hilfsmittel für Pigmentpasten.**

(30) Priorität : **27.08.79 DE 2934528**

(43) Veröffentlichungstag der Anmeldung : **08.04.81 Patentblatt 81/14**

(45) Bekanntmachung des Hinweises auf die Patenterteilung : **22.06.83 Patentblatt 83/25**

(84) Benannte Vertragsstaaten : **AT BE CH DE FR GB IT LI NL SE**

(56) Entgegenhaltungen :
**AT B 344 843**
**CH A 402 241**

(73) Patentinhaber : **Henkel Kommanditgesellschaft auf Aktien**
**Postfach 1100 Henkelstrasse 67**
**D-4000 Düsseldorf 1 (DE)**

(72) Erfinder : **Linden, Heinrich**
**Am Falder 75**
**D-4000 Düsseldorf-Holthausen (DE)**
Erfinder : **Bornmann, Hans**
**Am Falder 22**
**D-4000 Düsseldorf-Holthausen (DE)**
Erfinder : **Gress, Wolfgang**
**Westfalenweg 247**
**D-5600 Wuppertal-Elberfeld (DE)**
Erfinder : **Wegemund, Bernd, Dr.**
**Händelweg 3**
**D-5657 Haan /Rhld. (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

EP 0 026 308 B1

# Verwendung von Reaktionsprodukten ungesättigter Dicarbonsäuren und Estern als Hilfsmittel für Pigmentpasten

Gegenstand der Erfindung ist die Verwendung von Reaktionsprodukten aus ethylenisch ungesättigten Dicarbonsäuren oder deren Anhydriden und Dicarbonsäureneutralestern ungesättigter Fettalkohole als Hilfsmittel für die Herstellung von Pigmentpasten mit hohen Pigmentanteilen.

Im Zusammenhang mit der vorliegenden Erfindung sind unter Pigmentpasten Suspensionen von Pigmenten und Füllstoffen, vorwiegend anorganischer Natur, in organischen, nichtoder schwerflüchtigen Flüssigkeiten zu verstehen.

Bei der Einarbeitung von pulverförmigen Pigmenten in Kunststoffe, Beschichtungsstoffe und Druckfarben bereitet nicht nur die Homogenisierung der Pigmente, sondern auch deren betriebliche Handhabung Schwierigkeiten. So sind beispielsweise der Transport, die Dosierung und die staubfreie Handhabung pulverförmiger Pigmente bei einer kontinuierlichen Fertigung von eingefärbten Kunststoffen sehr problematisch.

Um diese Schwierigkeiten auszuschalten, verwendet man in zunehmendem Maße aus flüssigen organischen Medien und pulverförmigen Pigmenten bereitete Pigmentpasten.

Für die Pasten kommen Pigmente, wie z. B. unbehandelte und nachbehandelte Titandioxidtypen, natürliche und synthetische Eisenoxidpigmente, Chromgelb, Chromoxidgrün und Molybdatrot, ferner Füllstoffe wie Siliciumdioxid, Calciumcarbonat und Dolomit in Frage. Als flüssige organische Medien eignen sich unter anderem Dioctylphthalat, Dibutylphthalat, Ester der Maleinsäure, Fettsäureester, Mineralöle, natürliche Öle und deren Epoxydationsprodukt. Die Herstellung der Pasten erfolgt mit Hilfe üblicher Mischgeräte, wie Rührwerken, Knetern, Walzenstühlen oder schnelllaufenden Mischaggregaten vom Dissolver-Typ.

Die auf diese Weise hergestellten Pasten haben den Nachteil, daß sie nur einen geringen Pigmentanteil besitzen, wenn man auf flüssige, leicht dosierbare Zubereitung hinarbeitet. In der Praxis ist es jedoch meistens notwendig und rationell, zum Beispiel beim Einfärben von Kunststoffen, den flüssigen Anteil der Pigmentpasten möglichst gering zu halten. Aus diesen Gegebenheiten erhebt sich die Forderung nach Pigmentpasten mit hohen Pigmentanteilen.

Es wurden bereits verschiedene Hilfsmittel vorgeschlagen, die als verhältnismäßig kleine Zusätze die Viskosität von Pigmentpasten erniedrigen und so die Herstellung von Pasten mit höheren Pigmentanteilen ermöglichen sollen. Beispielsweise wird in der Praxis häufig technisches Glycerinmonooleat eingesetzt. Derartige Produkte erfüllen die gestellten Anforderungen nur unvollkommen.

Es wurde nun gefunden, daß Reaktionsprodukte aus

A) Itaconsäure, Ethylendicarbonsäuren der Formel I

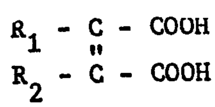

(I)

oder Ethylendicarbonsäureanhydriden der Formel II

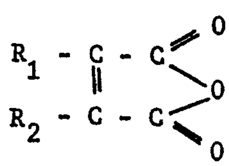

(II)

in denen $R_1$ und $R_2$ Wasserstoff oder einen Methylrest bedeuten, und

B) einem Ester der Formel III

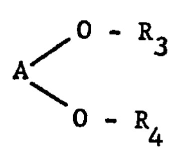

(III)

in der $R_3$ und $R_4$ für aus ungesättigten Fettalkoholen stammende Alkenylreste mit 14 bis 20 Kohlenstoffatomen stehen, während A den Rest der Itaconsäure, den Rest einer aliphatischen Dicarbonsäure der Formel IV

$$HOOC{-}(CH_2)_n{-}COOH \qquad (IV)$$

in der n eine ganze Zahl von 1 bis 10 ist, bedeutet,
zu deren Herstellung man Itaconsäure, Ethylendicarbonsäure der Formel I oder Ethylendicarbonsäureanhydrid der Formel II mit dem Ester der Formel III im Gewichtsverhältnis 1 : 7 bis 1 : 35 1 bis 25 Stunden lang auf 200 bis 250 °C erhitzt, ausgezeichnet als Hilfsmittel für die Herstellung von Pigmentpasten auf Basis von Pigmenten, einem flüssigen organischen Medium und gegebenenfalls Füllstoffen geeignet sind.

Als Ethylendicarbonsäuren der Formel I kommen Fumarsäure, Citraconsäure, Mesaconsäure, Dimethylmaleinsäure, Dimethylfumarsäure und vorzugsweise Maleinsäure, als Ethylendicarbonsäureanhydride der Formel II die Anhydride der Citraconsäure und Dimethylmaleinsäure sowie vorzugsweise Maleinsäureanhydrid in Frage. Bei den aliphatischen Dicarbonsäuren der Formel III kommen alle Glieder der homologen Reihe von der Malonsäure bis zur Dodecandisäure in Betracht.

Die Ester der Formel III stellen bekannte Verbindungen dar, die nach gängigen Verfahren aus den genannten Dicarbonsäuren und einfach oder mehrfach ungesättigten Fettalkoholen mit 14 bis 20 Kohlenstoffatomen erhalten werden können. Die entsprechenden ungesättigten Alkohole lassen sich technisch aus den in tierischen und pflanzlichen Fetten vorkommenden Fettsäuren oder deren Estern mit einwertigen Alkoholen durch Reduktion mit Natrium und Alkohol oder durch katalytische Hydrierung herstellten. Nach diesen Verfahren werden keine chemisch reinen Verbindungen erhalten. Die « technischen ungesättigten Alkohole » stellen vielmehr Gemische aus einfach und mehrfach ungesättigten Alkoholen unterschiedlicher Kettenlänge dar, die zumeist einen mehr oder minder großen Anteil an gesättigten Verbindungen enthalten, wobei die Zusammensetzung in starkem Maße von der Herkunft der Ausgangsfettsäuren abhängt. Besonders geeignet für die Herstellung der erfindungsgemäß zu verwendenden Produkte sind Ester der Formel III, in denen die Alkenylreste $R_3$ und $R_4$ aus einem technischen Oleylalkohol oder aus einem aus den Fettsäuren des Sojaöls erhältlichen technischen Sojaalkohol stammen.

Zur Herstellung der Ester der Formel III setzt man zweckmäßigerweise die ungesättigten Fettalkohole mit Itaconsäure, den jeweiligen Ethylendicarbonsäuren, aliphatischen Dicarbonsäuren oder deren Anhydriden im Molverhältnis 2 : 1 um. Dabei werden die Reaktionspartner auf Temperaturen von 120 bis 250 °C erhitzt und das entstehende Wasser kontinuierlich aus dem Reaktionsgemisch entfernt. Im einfachsten Fall destilliert man das Reaktionswasser über einen absteigenden Kühler ab. Das entstehende Wasser kann aber auch durch azeotrope Destillation mit einem geeigneten Lösungsmittel wie zum Beispiel Xylol unter Verwendung eines Rückflußkühlers mit zwischengeschaltetem Wasserabscheider aus der Reaktionsmischung entfernt werden. Die Veresterung ist beendet, wenn die theoretisch zu erwartende Menge Wasser übergegangen ist. Gegebenenfalls vorhandenes Lösungsmittel wird anschließend abdestilliert.

Zur Herstellung der erfindungsgemäß zu verwendenden Reaktionsprodukte werden die Ester der Formel III im gewünschten Gewichtsverhältnis mit Itaconsäure, Ethylendicarbonsäure oder Ethylendicarbonsäureanhydrid vermischt. Anschließend wird das Gemisch 1 bis 25 Stunden lang auf Temperaturen von 200 bis 250 °C erhitzt. Nach dem Abkühlen kann das Reaktionsprodukt direkt seiner Verwendung zugeführt werden.

In den Fällen, in denen sich der Formel III von der Itaconsäure oder einer Ethylendicarbonsäure der Formel I ableitet, können die erfindungsgemäß zu verwendenden Reaktionsprodukte auch dadurch erhalten werden, daß man ungesättigten Fettalkohol mit einer Menge Dicarbonsäure erhitzt, die sowohl für die Bildung der entsprechenden Neutralester als auch für die Weiterreaktion dieser Ester mit der ungesättigten Dicarbonsäure ausreicht. Dabei wird das Fettalkohol-/Dicarbonsäuregemisch 1 bis 30 Stunden lang auf 160 bis 250 °C erhitzt und das bei der Veresterungsreaktion entstehende Wasser aus dem Reaktionsgemisch entfernt.

Die auf diese Weise erhaltenen Produkte besitzen eine hervorragende Löslichkeit in den organischen Medien, die als flüssige Anteile in den Pigmentpasten verwendet werden.

Die zur Erzielung guter Effekte erforderlichen Zusatzmengen liegen, je nach Natur und Beschaffenheit der Pigmente und/oder Füllstoffe und je nach Art und Viskosität des flüssigen Mediums zwischen 0,5 bis 20 Gewichtsprozent, vorzugsweise zwischen 1,0 bis 10 Gewichtsprozent, bezogen auf die zum Einsatz gelangenden Pigmente.

Bei der Herstellung der Pigmentpastenkönnen die Bestandteile in Beliebiger Reihenfolge miteinander vermischt werden. So können die erfindungsgemäß zu verwendenden Reaktionsprodukte in den organischen Medien gelöst und die erhaltene Lösung dann mit dem Pigment und/oder Füllstoff homogenisiert werden. Es ist auch möglich, die erfindungsgemäß zu verwendenden Reaktionsprodukte zuerst mit den Pigmenten zu homogenisieren und dann die flüssigen organischen Medien zuzufügen. Für das Vermischen der Pigmente mit einer vorgefertigten Lösung aus organischem Medium und erfindungsgemäß zu verwendendem Reaktionsprodukt können konfektionierte Produkte hergestellt werden, beispielsweise solche mit einem Gehalt von 50 Gewichtsprozent an erfindungsgemäß zu verwendendem Produkt.

Die nachfolgenden Beispiele sollen den Gegenstand der Erfindung näher erläutern.

## Beispiele

Zur Herstellung der erfindungsgemäß zu verwendenden Reaktionsprodukte aus ungesättigten Fettalkohlen und ungesättigten Dicarbonsäuren wurden die Fettalkoholgemische A und B eingesetzt,

deren Zusammensetzung und Kennzahlen in der Tabelle 1 wiedergegeben sind. Diese Fettalkoholgemische können durch Hydrierung von Methylestern der Sojaölfettsäuren (A) und der technischen Ölsäure (B) erhalten werden.

Tabelle 1

| Fettalkoholgemische | | | A | B |
|---|---|---|---|---|
| Gewichtsprozent | $< C_{16}$ | gesättigt | 0,4 | 0,3 |
| Gewichtsprozent | $C_{16}$ | gesättigt | 10,6 | 1,9 |
| Gewichtsprozent | $C_{18}$ | gesättigt | 5,9 | 1,7 |
| Gewichtsprozent | $> C_{18}$ | gesättigt | 6,4 | 0,5 |
| Gewichtsprozent | $C_{16}$ | einfach ungesättigt | - | 0,6 |
| Gewichtsprozent | $C_{18}$ | einfach ungesättigt | 29,4 | 92,7 |
| Gewichtsprozent | $C_{18}$ | zweifach ungesättigt | 44,5 | 2,1 |
| Gewichtsprozent | $C_{18}$ | dreifach ungesättigt | 2,8 | 0,2 |
| Säurezahl | | | 0 | 0,7 |
| Verseifungszahl | | | 0,1 | 6,4 |
| OH-Zahl | | | 214 | 201 |
| Jodzahl (nach Wijs) | | | 134,6 | 93,4 |
| Molgewicht nach OH-Zahl | | | 262 | 279 |

5,7 Gewichtsprozent des Fettalkoholgemisches A besaßen konjugierte Doppelbindungen.

Zum Nachweis von freiem Maleinsäureanhydrid in den im folgenden beschriebenen Umsetzungsprodukten von Maleinsäureanhydrid mit ungesättigten Fettalkoholen diente die in Ber. 51 (1918), S. 1820, beschriebene Farbreaktion des Dimethylanilins mit Maleinsäureanhydrid. Die in den Umsetzungsprodukten vorhandenen Carbonsäureanhydridgruppierungen wurden mit Hilfe der in Anal. Chim. Acta 2 (1948), S. 146 bis 148, beschriebenen « Anilin-Säurezahl » bestimmt.

Für die Erprobung als Hilfsmittel für die Herstellung von Pigmentpasten wurden die nachstehend beschriebenen Reaktionsprodukte 1 bis 3 aus ungesättigten Fettalkoholen mit Maleinsäureanhydrid und das Reaktionsprodukt 4 aus Fettalkoholen und Itaconsäure synthetisiert :

### Reaktionsprodukt 1

262 g (1 Mol) des technischen Fettalkoholgemisches A, 49 g (0,5 Mol) Maleinsäureanhydrid und 80 g Xylol wurden 7 Stunden lang bei 160 bis 200 °C gerührt. Mit Hilfe eines Wasserabscheiders wurden in dieser Zeit 8,5 g Wasser (94,5 % der Theorie) aus dem Reaktionsgemisch entfernt. Anschließend wurde das Xylol im Wasserstrahlvakuum abdestilliert.

95 g (0,16 Mol) des auf diese Weise erhaltenen neutralen Fettalkohol-Maleinsäureester (Säurezahl > 5) wurden mit 5 g (0,05 Mol) Maleinsäureanhydrid auf 220 °C erhitzt und 6 Stunden lang bei dieser Temperatur gehalten. Danach war in dem hellgelben, klaren Reaktionsprodukt kein Maleinsäureanhydrid mehr vorhanden. Das Produkt hatte eine Anilinsäurezahl von 35. Seine Viskosität bei 20 °C betrug 30 Pa.s.

### Reaktionsprodukt 2

279 g (1 Mol) des technischen Fettalkoholgemisches B und 49 g (0,5 Mol) Maleinsäureanhydrid wurden 6 Stunden lang auf einer Temperatur von 160 bis 200 °C gehalten. Das bei der Reaktion entstehende Wasser wurde über einen absteigenden Kühler kontinuierlich aus dem Reaktionsgemisch abdestilliert. Insgesamt gingen dabei 8,5 g Wasser über. 90 g (0,14 Mol) des erhaltenen neutralen Fettalkohol-Maleinsäureesters (Säurezahl 8,2) wurden mit 10 g (0,1 Mol) Maleinsäureanhydrid auf 240 °C erhitzt und 8 Stunden lang bei dieser Temperatur gehalten. In dem leicht braunen Reaktionsprodukt konnte keine Maleinsäureanhydrid mehr nachgewiesen werden. Die Anilinsäurezahl betrug 57, die Viskosität bei 20 °C 15 Pa.s.

Reaktionsprodukt 3

279 g (1 Mol) des Fettalkoholgemisches B und 84,3 g (0,86 Mol) Maleinsäureanhydrid wurden für die Dauer von 7 Stunden auf 160 bis 250 °C erwärmt. 8,8 g Reaktionswasser wurden abdestilliert. Im leicht braunen Reaktionsprodukt konnte kein Maleinsäureanhydrid mehr nachgewiesen werden. Die Anilinsäurezahl betrug 51, die Viskosität bei 20 °C 18 Pa.s.

Reaktionsprodukt 4

262 g (1 Mol) des technischen Fettalkoholgemisches A und 65 g (0,5 Mol) Itaconsäure wurden während 8 Stunden auf 150 bis 220 °C erwärmt. Die Menge des mit Hilfe eines Abscheiders entfernten Reaktionswassers betrug 16,8 g. 90 g (0,145 Mol) des erhaltenen neutralen Fettalkohol-Itaconsäureesters (Säurezahl = 8,7) wurden mit 10 g (0,077 Mol) Itaconsäure auf 250 °C erhitzt und 6 Stunden bei dieser Temperatur belassen. Das hellgelbe, klare Reaktionsprodukt wies eine Anilinsäurezahl von 47 auf ; seine Viskosität bei 20 °C betrug 2,5 Pa.s.

Reaktionsprodukt 5

279 g (1 Mol) des technischen Fettalkoholgemisches B und 50 g (0,5 Mol) Bernsteinsäureanhydrid wurden 5 Stunden lang bei 190-240 °C gerührt. Die Menge des entstandenen Reaktionswassers, das über einen absteigenden Kühler abdestilliert wurde, betrug 8,7 g (96,7 % der Theorie).

90 g (0,14 Mol) des erhaltenen Fettalkohol-Bernstein-säureesters (Säurezahl 2,9) wurden mit 10 g (0,1 Mol) Maleinsäureanhydrid auf 250 °C erwärmt und 7 Stunden lang bei dieser Temperatur belassen. Das dunkelbraune Reaktionsprodukt hatte eine Anilinsäurezahl von 48,3 ; seine Viskosität betrug 0,31 Pa.s.

Vergleichssubstanz

Für die nachstehend beschriebenen Vergleichsversuche wurde ein handelsübliches « Glycerinmonooleat » der folgenden Zusammensetzung verwendet :

| | |
|---|---|
| Glycerinmonooleat : | circa 50 % |
| Glycerindioleat : | circa 30 % |
| Glycerintrioleat : | circa 20 % |
| Spuren Glycerin | |

Beispiel 1

In einer Rührvorrichtung, bestehend aus einem zylinderförmigen Metallbehälter von circa 0,5 l Inhalt und einem zentrisch angeordneten Sägezahnrührer (Dissolver-Typ), wurden 6,5 g Reaktionsprodukt 1 und 133,5 g Di-2-ethyl-hexylphthalat (DOP) gemischt. In die klare Lösung wurden unter mäßigem Rühren 260 g eines unbehandelten handelsüblichen Titandioxidpigments, Rutilform (Korngröße 0,2 bis 0,3 µm), portionsweise eingetragen und bei einer Umfangsgeschwindigkeit von circa 8 m/s für die Dauer von 15 min gerührt.

Man erhielt eine flüssige Pigmentpaste, deren Viskosität — mit einem Rotationsviskosimeter nach Brookfield, Typ LVT, bestimmt — 8,8 Pa.s bei 20 °C betrug.

Vergleichsbeispiel 1a

Verwendete man in der Pigmentpaste nach Beispiel 1 anstelle des Reaktionsproduktes 1 Glycerinmonooleat (Vergleichssubstanz), so erhielt man eine hochviskose Paste, deren Viskosität mit dem Brookfield-Viscosimeter nicht mehr gemessen werden konnte.

Vergleichsbeispiel 1b

Beim Versmischen von 140 g Di-2-ethylhexylphthalat und 260 g unbehandeltem Titandioxid wurde eine krümelige Masse erhalten.

Die Eigenschaften der Pigmentpasten nach den Beispielen 1, 1a und 1b sind in der Tabelle 2 einander gegenübergestellt.

(Siehe die Tabelle 2 Seite 6)

Tabelle 2

| Beispiel | Zusatz | | Zusammensetzung in Gew.% | | | Viskosität+) | Beschaffenheit |
|---|---|---|---|---|---|---|---|
| | Art | Gew.%, bez. auf Pigment | $TiO_2$ | DOP | Zusatz | Pa · s | |
| 1 | Reaktions-produkt 1 | 2,5 | 65 | 33,4 | 1,6 | 8,8 | flüssig |
| 1a | Glycerin-monooleat | 2,5 | 65 | 33,4 | 1,6 | nicht meßbar | dicke Paste |
| 1b | Blindversuch | - | 65 | 35 | - | nicht meßbar | krümelige Masse |

+) Die Viskositäten wurden mit einem Brookfield LVT-Gerät, Spindel Nr. 3 bei 12 U/min und 20 °C gemessen.

Aus der Gegenüberstellung in Tabelle 2 ist die überlegene Wirkung des erfindungsgemäß verwendeten Reaktionsproduktes 1 im Vergleich zu Glycerinmonooleat klar ersichtlich.

Beispiel 2

Unter Einbeziehung des erfindungsgemäß zu verwendenden Reaktionsproduktes 2 als Hilfsmittel, eines unbehandelten Titandioxidpigmentes und von Di-2-ethylhexylphthalat (DOP) als flüssiges organisches Medium wurde bei einer festgelegten Hilfsmittelmenge von 2,5 Gewichtsprozent, bezogen auf die Menge des eingesetzten Pigmentes, die höchste mögliche Pigmentkonzentration ermittelt, bei der sich die Paste im Dissolver (siehe Beispiel 1) noch hinreichend homogenisieren ließ. In der erhaltenen Paste wurde die Pigmentkonzentration durch stufenweises Verdünnen mit DOP um jeweils 5 Gewichtsprozent gesenkt. Von allen Pastenzubereitungen dieser Verdünnungsreihe wurde die Viskosität bestimmt und die äußere Beschaffenheit beurteilt.

Hierzu wurden 175 g Titandioxid und 4,4 g des Reaktionsproduktes 2 in dem Rührgefäß des Dissolvers bei einer Umlaufgeschwindigkeit von 24 m/s im Verlauf von 5 Minuten mit insgesamt 70,6 g DOP zusammengerührt. Nach Bestimmung der Viskosität und Beurteilung der äußeren Beschaffenheit wurde die Paste mit 19,2 g DOP verdünnt und 2 Minuten lang homogenisiert. Die Pigmentkonzentration wurde dadurch von 70 auf 65 Gewichtsprozent vermindert. Durch Zugabe von 22,5 g und 26,5 g DOP wurde die Verdünnungsreihe fortgesetzt.

Vergleichsbeispiel 2a

Analog Beispiel 2 wurde unter Verwendung von Glycerinmonooleat (Vergleichssubstanz) eine Verdünnungsreihe hergestellt. Bei einer Hilfsmittelmenge von 2,5 Gewichtsprozent, bezogen auf die Menge des Titandioxids, betrug die höchste mögliche Pigmentkonzentration 55 Gewichtsprozent. Die Verdünnungen wurden, wie in Beispiel 2 beschrieben, durchgeführt.

Vergleichsbeispiel 2b

Bei einer Verdünnungsreihe, die ohne Hilfsmittelzusatz mit DOP durchgeführt wurde, lag die höchste mögliche Pigmentkonzentration bei 25 Gewichtsprozent. Die Zusammensetzung aller Pigmentpasten aus den Beispielen 2, 2a und 2b und deren Eigenschaften sind in der Tabelle 3 zusammengefaßt. Weiterhin wurden die Viskositäten in Abhängigkeit von der Pigmentkonzentration in Abbildung 1 graphisch dargestellt.

(Siehe die Tabelle 3 Seite 8)

Tabelle 3

| Zusatz | | Zusammensetzung in Gew.% | | | Viskosität+ | Beschaffenheit |
|---|---|---|---|---|---|---|
| Art | Gew.%, bez. auf Pigment | $TiO_2$ | DOP | Zusatz | Pa·s | |
| **Beispiel 2** | | | | | | |
| Reaktionsprodukt 2 | 2,5 | 70 | 28,2 | 1,8 | 36 | flüssig, leicht strukturviskos |
| | 2,5 | 65 | 33,4 | 1,6 | 14,7 | flüssig |
| | 2,5 | 60 | 38,5 | 1,5 | 10,0 | dito |
| | 2,5 | 55 | 43,6 | 1,4 | 8,0 | dito |
| **Vergleichsbeispiel 2a** | | | | | | |
| Glycerinmonooleat | 2,5 | 55 | 43,6 | 1,4 | 53 | flüssig, deutlich strukturviskos |
| | 2,5 | 50 | 48,7 | 1,3 | 32,3 | flüssig, leicht strukturviskos |
| | 2,5 | 45 | 53,9 | 1,1 | 18,9 | dito |
| | 2,5 | 40 | 59,0 | 1,0 | 12,2 | dito |
| **Vergleichsbeispiel 2b** | | | | | | |
| Blindversuch | - | 25 | 75 | - | nicht meßbar | stark strukturviskos |
| | - | 20 | 80 | - | 53 | dito |
| | - | 15 | 85 | - | 18,9 | flüssig, leicht-strukturviskos |
| | - | 10 | 90 | - | 3,2 | flüssig |

+) Die Viskositäten wurden mit einem Brookfield LVT-Gerät, Spindel Nr. 4 bei 12 U/min und 20 °C gemessen.

Abbildung 1

Beispiel 2 - Vergleichsbeispiele 2a und 2b

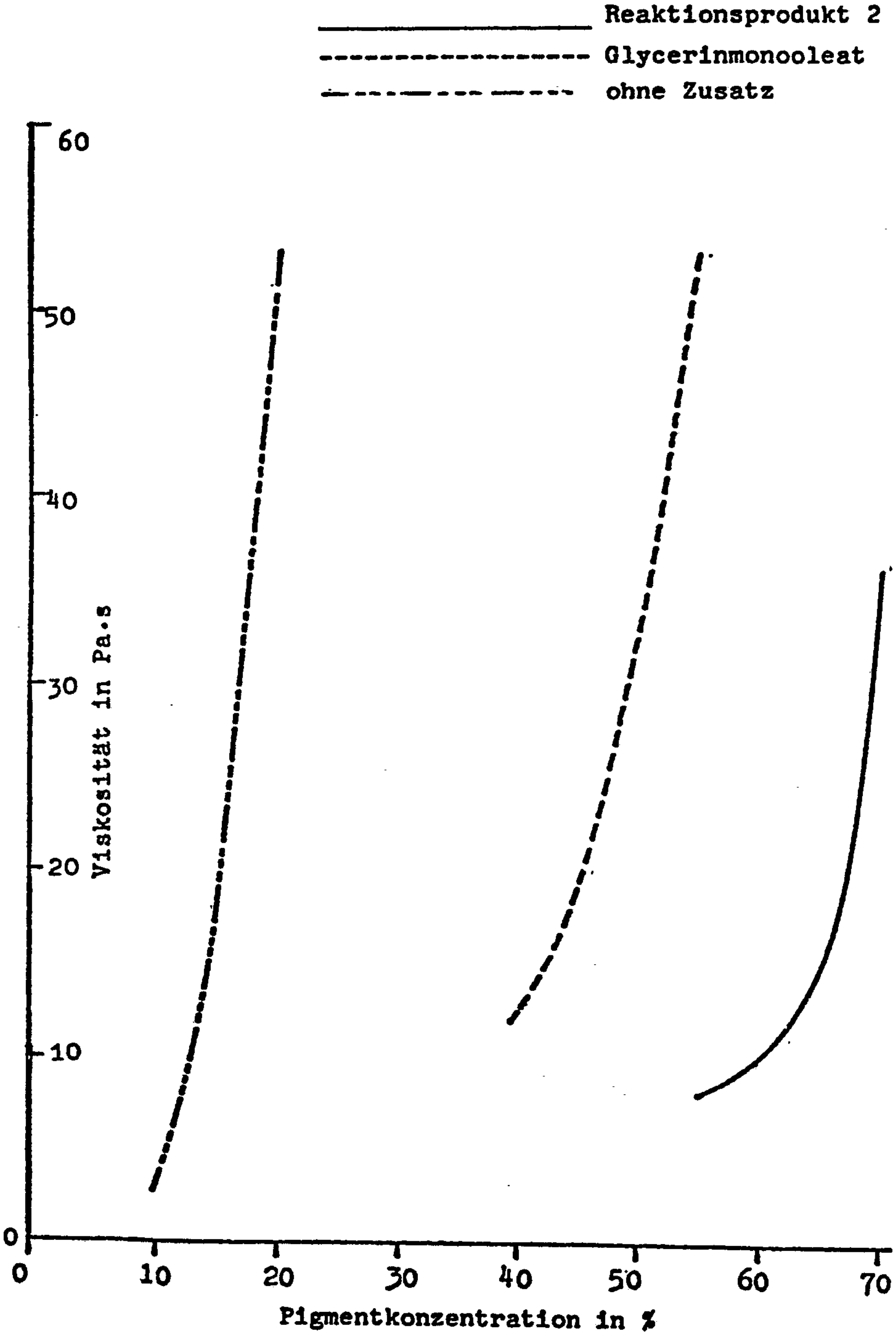

Die Überlegenheit des erfindungsgemäß zu verwendenden Reaktionsproduktes 2 ist aus den Viskositätswerten klar zu erkennen ; sie tritt bei Berücksichtigung der äußeren Beschaffenheit besonders markant hervor.

## Beispiel 3, Vergleichsbeispiele 3a und 3b

Unter Verwendung eines handelsüblichen mit $Al_2O_3$, $SiO_2$ und ZnO nachbehandelten Titandioxids, Rutilform (Korngröße 0,2 bis 0,3 µm) wurden, wie in den Beispielen 2, 2a und 2b beschrieben, die entsprechenden Verdünnungsreihen 3, 3a und 3b hergestellt.

Die in der Tabelle 4 und der Abbildung 2 zusammengefaßten Ergebnisse lassen die vorteilhafte Wirkung des erfindungsgemäß zu verwendenden Reaktionsproduktes 2 klar erkennen.

(Siehe die Tabelle 4 Seite 11)

Tabelle 4

| Zusatz | | Zusammensetzung in Gew.% | | | Viskosität+ | Beschaffenheit |
|---|---|---|---|---|---|---|
| Art | Gew.%, bez. auf Pigment | $TiO_2$ | DOP | Zusatz | Pa·s | |
| <u>Beispiel 3</u> | | | | | | |
| Reaktionsprodukt 2 | 2,5 | 80 | 18 | 2,0 | 55 | flüssig |
| " | 2,5 | 75 | 23,1 | 1,9 | 10 | dito |
| " | 2,5 | 70 | 28,2 | 1,8 | 3,8 | dito |
| " | 2,5 | 65 | 33,4 | 1,6 | 1,2 | dito |
| <u>Vergleichsbeispiel 3a</u> | | | | | | |
| Glycerinmonooleat | 2,5 | 70 | 28,2 | 1,8 | 54 | stark strukturviskos |
| " | 2,5 | 65 | 33,4 | 1,6 | 33,5 | flüssig, deutlich strukturviskos |
| " | 2,5 | 60 | 38,5 | 1,5 | 18,6 | flüssig, leicht strukturviskos |
| " | 2,5 | 55 | 53,6 | 1,4 | 12,4 | dito |
| <u>Vergleichsbeispiel 3b</u> | | | | | | |
| Blindversuch | - | 35 | 65 | - | 40 | stark strukturviskos |
| " | - | 30 | 70 | - | 17,9 | flüssig, leicht strukturviskos |
| " | - | 25 | 75 | - | 8,4 | dito |
| " | - | 20 | 80 | - | 3,3 | flüssig |

+) Die Viskositäten wurden mit einem Brookfield LVT-Gerät, Spindel Nr. 4 bei 12 U/min und 20 °C gemessen.

Abbildung 2

Beispiel 3 - Vergleichsbeispiele 3a und 3b

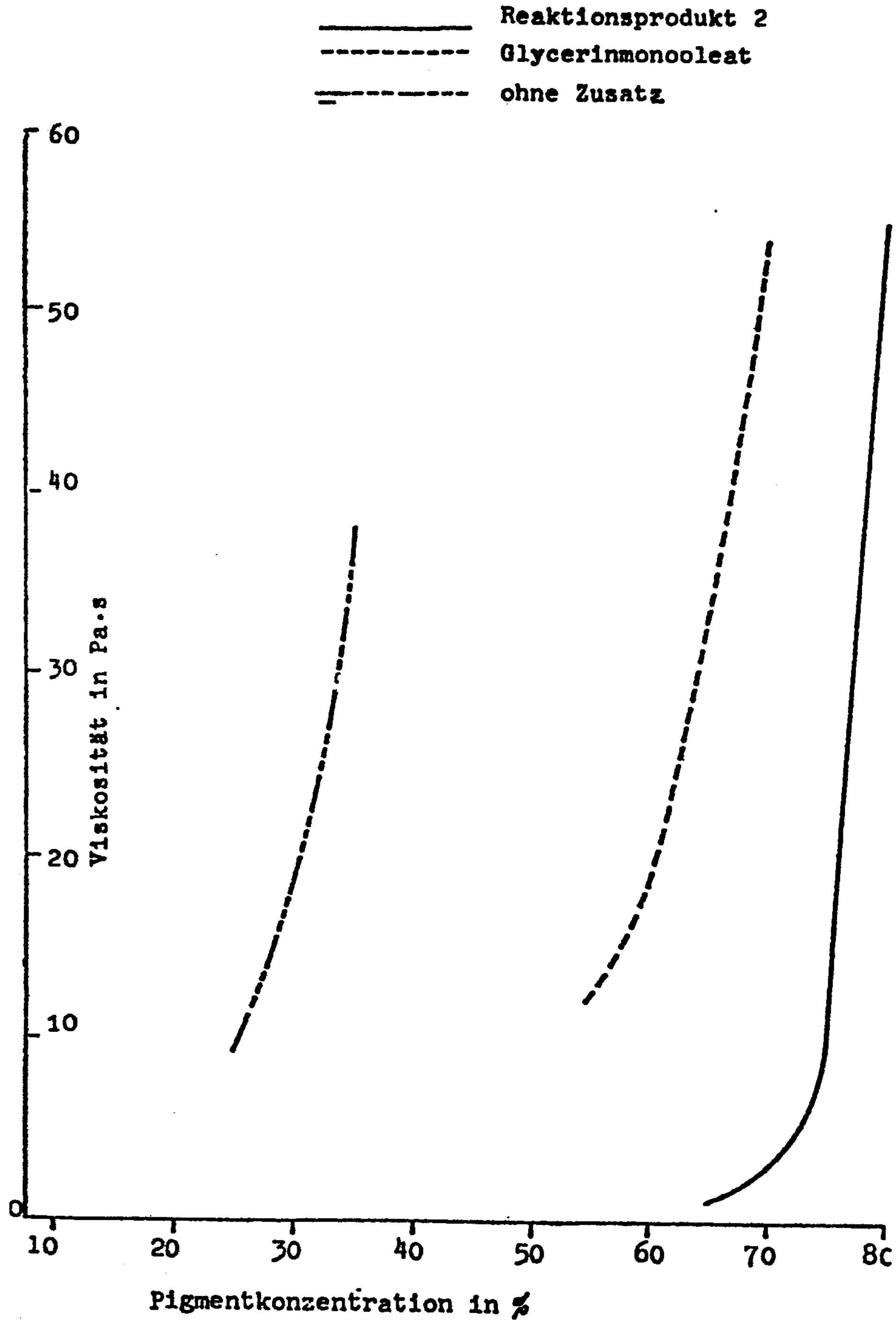

Beispiel 4, Vergleichsbeispiele 4a und 4b

Unter Einsatz eines handelsüblichen synthetischen Eisenoxidrots (Kugelform, Teilchengröße circa 0,17 µm) wurden, wie in den Beispielen 2, 2a und 2b beschrieben, die entsprechenden Verdünnungsreihen 4, 4a und 4b hergestellt.

Die in der Tabelle 5 und der Abbildung 3 wiedergegebenen Ergebnisse zeigen die vorteilhafte Wirkung des Reaktionsproduktes 2.

(Siehe die Tabelle 5 Seite 14)

Tabelle 5

| Zusatz | | Zusammensetzung in Gew.% | | | Viskosität+ | Beschaffenheit |
|---|---|---|---|---|---|---|
| Art | Gew.%, bez. auf Pigment | Eisenoxidrot | DOP | Zusatz | Pa·s | |
| Beispiel 4 | | | | | | |
| Reaktionsprodukt 2 | 2,5 | 70 | 28,2 | 1,8 | 36,5 | flüssig, leicht strukturviskos |
| " | 2,5 | 65 | 33,4 | 1,6 | 24,5 | flüssig |
| " | 2,5 | 60 | 38,5 | 1,5 | 11,7 | dito |
| " | 2,5 | 55 | 53,6 | 1,4 | 7,3 | dito |
| Vergleichsbeispiel 4a | | | | | | |
| Glycerinmonooleat | 2,5 | 60 | 38,5 | 1,5 | 50,3 | stark strukturviskos |
| " | 2,5 | 55 | 53,6 | 1,4 | 22,3 | flüssig, mäßig strukturviskos |
| " | 2,5 | 50 | 48,7 | 1,3 | 13,7 | flüssig, leicht strukturviskos |
| " | 2,5 | 45 | 53,9 | 1,1 | 8,4 | dito |
| Vergleichsbeispiel 4b | | | | | | |
| Blindversuch | - | 35 | 65 | - | 40 | stark strukturviskos |
| " | - | 30 | 70 | - | 17,9 | flüssig, leicht strukturviskos |
| " | - | 25 | 75 | - | 8,4 | dito |
| " | - | 201 | 80 | - | 3,3 | flüssig |

+) Die Viskositäten wurden mit einem Brookfield LVT-Gerät, Spindel Nr. 4 bei 12 U/min und 20 °C gemessen.

Abbildung 3

Beispiel 4 - Vergleichsbeispiele 4a und 4b

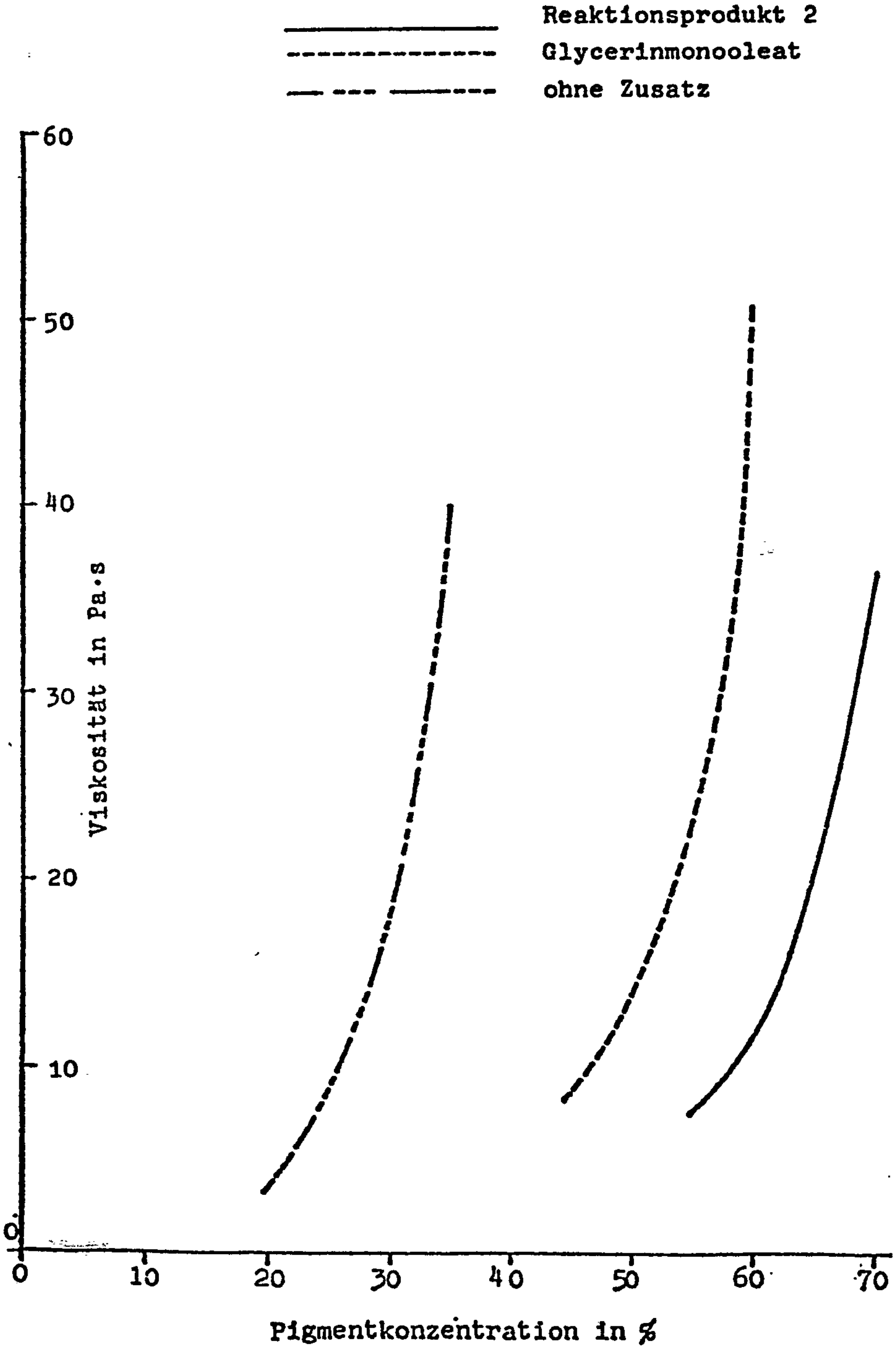

Beispiel 5, Vergleichsbeispiel 5a

Analog Beispiel 1 wurden aus einem handelsüblichen Chromgelb (monokline, kurznadelige Mischkristalle der Formel x $PbCrO_4 \cdot$ y $PbSO_4$ mit einer durchschnittlichen Teilchengröße von 0,16 µm) und einem vorwiegend paraffinischen Mineralöl der Siedegrenze 280 bis 305 °C Pasten hergestellt, die 75 Gewichtsprozent Pigment und — bezogen auf das Pigment — 1,25 Gewichtsprozent, 2,5 Gewichtsprozent und 5 Gewichtsprozent Reaktionsprodukt 2 enthielten.

Im Vergleichsbeispiel 5a wurde eine Pigmentpaste aus den gleichen Rohstoffen, jedoch ohne Zusatz eines Hilfsmittels hergestellt. Dabei ließen sich maximal nur 40 Gewichtsprozent Pigment einarbeiten. Die erhaltene Paste wurde mit Mineralöl auf Pigmentkonzentrationen 35 und 30 Gewichtsprozent verdünnt.

Die Eigenschaften der Pigmentpasten sind in der Tabelle 6 wiedergegeben.

(Siehe die Tabelle 6 Seite 17)

Tabelle 6

| Zusatz | | Zusammensetzung in Gew.% | | | Viskosität+ | Beschaffenheit |
|---|---|---|---|---|---|---|
| Art | Gew.% bez. auf Pigment | Chromgelb | Mineralöl | Zusatz | Pa·s | |
| **Beispiel 5** | | | | | | |
| Reaktionsprodukt 2 | 1,25 | 75 | 24,1 | 0,9 | 8,6 | flüssig, leicht strukturviskos |
| " | 2,5 | 75 | 23,1 | 1,9 | 1,8 | flüssig |
| " | 5,0 | 75 | 21,2 | 3,8 | 1,0 | dito |
| **Vergleichsbeispiel 5a** | | | | | | |
| Blindversuch | - | 40 | 60 | - | nicht meßbar | dicke Paste |
| " | - | 35 | 65 | - | 25 | stark strukturviskose Paste |
| " | - | 30 | 70 | - | 9 | noch strukturviskose Paste |

+) Die Viskositäten wurden mit einem Brookfield LVT-Gerät, Spindel Nr. 4 bei 12 U/min und 20 °C gemessen.

Beispiel 6, Vergleichsbeispiele 6a und 6b

Beispiel 1 wurde mit der Abwandlung wiederholt, daß man anstelle des Reaktionsproduktes 1 das Reaktionsprodukt 3 verwendete.
Im Vergleichsbeispiel 6a wurde Glycerinmonooleat als Vergleichssubstanz eingesetzt.
Das Vergleichsbeispiel 6b wurde ohne Hilfsmittel durchgeführt.
Die Ergebnisse dieser Versuchsreihe sind in der Tabelle 7 wiedergegeben.

(Siehe die Tabelle 7 Seite 19)

Tabelle 7

| Beispiel | Zusatz | | Zusammensetzung in Gew.% | | | Viskosität+ | Beschaffenheit |
|---|---|---|---|---|---|---|---|
| | Art | Gew.%, bez. auf Pigment | $TiO_2$ | DOP | Zusatz | Pa · s | |
| 6 | Reaktionsprodukt 3 | 2,5 | 65 | 33,4 | 1,6 | 10,2 | flüssig |
| 6a | Glycerinmonooleat | 2,5 | 65 | 33,4 | 1,6 | nicht meßbar | dicke Paste |
| 6b | Blindversuch | - | 65 | 35 | - | nicht meßbar | krümelige Masse |

+) Die Viskositäten wurden mit einem Brookfield LVT-Gerät, Spindel Nr. 4 bei 30 U/min und 20 °C gemessen.

Beispiel 7

Beispiel 2 wurde mit der Abwandlung wiederholt, daß man anstelle des Reaktionsproduktes 2 das Reaktionsprodukt 4 verwendete. Die dabei erhaltenen Ergebnisse sind in der Tabelle 8 zusammengefaßt.

(Siehe die Tabelle 8 Seite 21)

Tabelle 8

| Zusatz | | Zusammensetzung in Gew.% | | | Viskosität+ | Beschaffenheit |
|---|---|---|---|---|---|---|
| Art | Gew.%, bez. auf Pigment | $TiO_2$ | DOP | Zusatz | Pa · s | |
| Reaktionsprodukt 4 | 2,5 | 70 | 28,2 | 1,8 | 21,2 | flüssig |
| " | 2,5 | 65 | 33,4 | 1,6 | 10,2 | flüssig |
| " | 2,5 | 60 | 38,5 | 1,5 | 7,2 | flüssig |
| " | 2,5 | 55 | 53,6 | 1,4 | 4,6 | flüssig |

+) Die Viskositäten wurden mit einem Brookfield LVT-Gerät, Spindel Nr. 4 bei 12 U/min und 20 °C gemessen.

Beispiel 8

Beispiel 2 wurde in der Abwandlung wiederholt, daß man anstelle des Reaktionsproduktes 2 das Reaktionsprodukt 5 verwendete. Die höchste mögliche Pigmentkonzentration betrug 65 Gewichtsprozent. Die Eigenschaften der erhaltenen Pigmentpasten sind in der Tabelle 9 wiedergegeben.

(Siehe die Tabelle 9 Seite 23)

Tabelle 9

| Zusatz | | Zusammensetzung in Gew.-% | | | Viskosität+ | |
|---|---|---|---|---|---|---|
| Art | Gewichtsprozent bezogen auf Pigment | $TiO_2$ | DOP | Zusätz | Pa·s | Beschaffenheit |
| Reaktionsprodukt 5 | 2,5 | 65 | 33,4 | 1,6 | 27,5 | flüssig, leicht strukturviskos |
| | 2,5 | 60 | 38,5 | 1,5 | 13,0 | flüssig |
| | 2,5 | 55 | 43,6 | 1,4 | 7,5 | flüssig |
| | 2,5 | 50 | 48,7 | 1,3 | 5,0 | flüssig |

+) Die Viskositäten wurden mit einem Brookfield LVT-Gerät, Spindel Nr. 4 bei 12 U/min und 20 °C gemessen.

**Ansprüche**

1. Verwendung von Reaktionsprodukten aus
A) Itaconsäure, Ethylendicarbonsäuren der Formel I

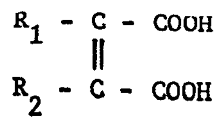

(I)

oder Ethylendicarbonsäureanhydriden der Formel II

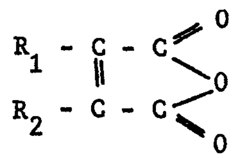

(II)

in denen $R_1$ und $R_2$ Wasserstoff oder einen Methylrest bedeuten, und
B) einem Ester der Formel III

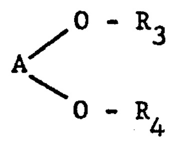

(III)

in der $R_3$ und $R_4$ für aus ungesättigten Fettalkoholen stammende Alkenylreste mit 14 bis 20 Kohlenstoffatomen stehen, während A den Rest der itaconsäure, den Rest einer Ethylendicarbonsäure der Formel I oder den Rest einer aliphatischen Dicarbonsäure der Formel IV

$$HOOC—(CH_2)_n—COOH \qquad (IV)$$

in der n eine ganze Zahl von 1 bis 10 ist, bedeutet,
zu deren Herstellung man Itaconsäure, Ethylendicarbonsäure der Formel I oder Ethylendicarbonsäureanhydrid der Formel II mit dem Ester der Formel III im Gewichtsverhältnis 1 : 7 bis 1 : 35 1 bis 25 Stunden lang auf 200 bis 250 °C erhitzt, als Hilfsmittel für die Herstellung von flüssigen Pigmentpasten auf Basis von Pigmenten, einem flüssigen organischen Medium und gegebenenfalls Füllstoffen.

2. Verwendung nach Anspruch 1, dadurch gekennzeichnet, daß man Reaktionsprodukte einsetzt, in denen die Reste $R_3$ und $R_4$ aus dem technischen Oleylalkohol oder dem technischen Sojaalkohol bestehen.

3. Verwendung nach den Ansprüchen 1 und 2, dadurch gekennzeichnet, daß man Reaktionsprodukte der Maleinsäure oder des Maleinsäureanhydrids mit Estern der Formel III einsetzt.

4. Verwendung nach den Ansprüchen 1 bis 3, dadurch gekennzeichnet, daß man anorganische Pigmente und Füllstoffe einsetzt.

5. Verwendung nach den Ansprüchen 1 bis 4, dadurch gekennzeichnet, daß man als flüssiges organisches Medium Phthalsäureester einsetzt.

6. Verwendung nach den Ansprüchen 1 bis 4, dadurch gekennzeichnet, daß man als flüssiges organisches Medium Mineralöle einsetzt.

7. Verwendung nach den Ansprüchen 1 bis 6, dadurch gekennzeichnet, daß man die Reaktionsprodukte in Mengen von 0,5 bis 20 Gewichtsprozent, vorzugsweise 1 bis 10 Gewichtsprozent, bezogen auf das Pigment, einsetzt.

**Claims**

1. The utilisation of reaction products of
A) itaconic acid, ethylene dicarboxylic acids corresponding to formula I

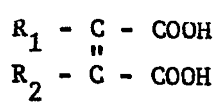

(I)

or ethylene dicarboxylic acid anhydrides corresponding to formula II

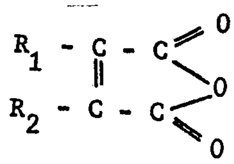

(II)

in which $R_1$ and $R_2$ represent hydrogen or a methyl radical, and

B) an ester corresponding to formula III

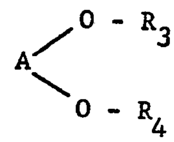

(III)

in which $R_3$ and $R_4$ represent $C_{14}$-$C_{20}$ alkenyl radicals emanating from unsaturated fatty alcohols and A represents the residue of the itaconic acid, the residue of an ethylene dicarboxylic acid corresponding to formula I or the residue of an aliphatic dicarboxylic acid corresponding to formula IV

$$HOOC—(CH_2)_n—COOH \quad (IV)$$

in which n is an integer of from 1 to 10,
for the production of which itaconic acid, an ethylene dicarboxylic acid of formula I or an ethylene dicarboxylic acid anhydride of formula II is heated for 1 to 25 hours to 200-250 °C with an ester of formula III in a ratio by weight of from 1 : 7 to 1 : 35,
**as auxiliaries in the production of liquid pigment pastes based on pigments, a liquid organic medium and, optionally, fillers.**

2. The utilisation claimed in Claim 1, characterised in that reaction products in which the radicals $R_3$ and $R_4$ consist of technical oleyl alcohol or technical soya alcohol are used.

3. The utilisation claimed in Claims 1 and 2, characterised in that reaction products of maleic acid or maleic acid anhydride with esters of formula III are used.

4. The utilisation claimed in Claims 1 to 3, characterised in that inorganic pigments and fillers are used.

5. The utilisation claimed in Claims 1 to 4, characterised in that a phtalic acid ester is used as the liquid organic medium.

6. The utilisation claimed in Claims 1 to 4, characterised in that mineral oils are used as the liquid organic medium.

7. The utilisation claimed in Claims 1 to 6, characterised in that the reaction products are used in quantities of from 0,5 to 20 % by weight and preferably in quantities of from 1 to 10 % by weight, based on the pigment.

**Revendications**

1. Utilisation de produits réactionnels

A) de l'acide itaconique, d'acides éthylène-dicarboxyliques de formule I

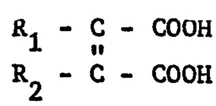

(I)

ou d'anhydrides d'acides éthylène-dicarboxyliques de formule II

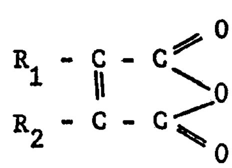

(II)

où $R_1$ et $R_2$ représentent chacun un atome d'hydrogène ou un groupe méthyle, et

B) d'un ester de formule III

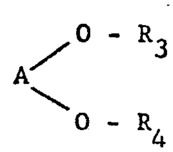

(III)

dans laquelle $R_3$ et $R_4$ représentent des groupes alcényle provenant d'alcools gras insaturés et contenant 14 à 20 atomes de carbone, tandis que A représente le radical de l'acide itaconique, le radical d'un acide éthylène-dicarboxylique de formule I ou le radical d'un acide dicarboxylique aliphatique de formule IV

$$HOOC{-}(CH_2)_n{-}COOH \qquad (IV)$$

dans laquelle n est un nombre entier de 1 à 10, produits pour la préparation desquels on chauffe l'acide itaconique, l'acide éthylène-dicarboxylique de formule I ou l'anhydride d'acide éthylène-dicarboxylique de formule II avec l'ester de formule III dans un rapport pondéral de 1 : 7 à 1 : 35, à 200-250 °C pendant 1 à 25 heures,
comme agents auxiliaires pour la préparation de pâtes pigmentaires liquides à base de pigments, d'un milieu organique liquide et éventuellement de charges.

2. Utilisation suivant la revendication 1, caractérisée en ce qu'on utilise des produits réactionnels dans lesquels les radicaux $R_3$ et $R_4$ sont constitués de l'alcool oléylique technique ou de l'alcool de soya technique.

3. Utilisation suivant les revendications 1 et 2, caractérisée en ce qu'on utilise des produits réactionnels de l'acide maléique ou de l'anhydride d'acide maléique avec des esters de formule III.

4. Utilisation suivant les revendications 1 à 3, caractérisée en ce qu'on utilise des pigments inorganiques et des charges.

5. Utilisation suivant les revendications 1 à 4, caractérisée en ce que, comme milieu organique liquide, on utilise des esters de l'acide phtalique.

6. Utilisation suivant les revendications 1 à 4, caractérisée en ce que, comme milieu organique liquide, on utilise des huiles minérales.

7. Utilisation suivant les revendications 1 à 6, caractérisée en ce qu'on utilise les produits de réaction en quantités de 0,5 à 20 % en poids, de préférence 1 à 10 % en poids par rapport au pigment.